# EUROPÄISCHE PATENTSCHRIFT

(11) **EP 0 818 093 B1**
(45) Veröffentlichungstag und Bekanntmachung des Hinweises auf die Patenterteilung: **02.11.2005**
(21) Anmeldenummer: 96905754.6
(22) Anmeldetag: 23.03.1996
(51) Int. Cl.: H04L 7/04, H04H 1/00

(54) **VERFAHREN ZUR SYNCHRONISIERUNG DES BLOCKZÄHLERS IN EINEM RDS-RADIO-DATEN-EMPFÄNGER**
PROCESS FOR SYNCHRONISING THE BLOCK COUNTER IN AN RDS RADIO DATA RECEIVER
PROCEDE DE SYNCHRONISATION DU COMPTEUR DE BLOCS DANS UN RECEPTEUR RDS DE DONNEES

(30) Priorität: 27.03.1995 DE 19511147
(43) Veröffentlichungstag der Anmeldung: 14.01.1998
(73) Patentinhaber: ROBERT BOSCH GMBH, 70442 Stuttgart (DE)
(72) Erfinder: NYENHUIS, Detlev, D-31079 Sibbesse (DE); HEGELER, Wilhelm, D-31134 Hildesheim (DE)
(86) Internationale Anmeldenummer: PCT/DE1996/000502
(87) Internationale Veröffentlichungsnummer: WO 1996/031032

(56) Entgegenhaltungen:
- US-A- 3 550 082
- EBU TECHNICAL SPECIFICATION E-3244, März 1984, BRUXELLES (BE), Seiten 37-42, XP002006522 TECHNICAL CENTRE OF THE EUROPEAN BROADCASTING UNION: "Specification for the radio data system RDS for VHF/FM sound broadcasting"

## Beschreibung

Gegenstand des Schutzrechtes ist ein Verfahren zur Synchronisierung des Blockzählers in einem RDS-Radio-Daten-Empfänger und eine Schaltungsanordnung zur Durchführung des Verfahrens.

Aus der US-A-3 550 082 ist ein Verfahren zur Synchronisierung eines Empfängers auf digital übertragene mittels eines nicht binären zyklischen fehlerkorrigierenden Codes gebildete Codewörter bekannt. Den zu übertragenden Codewörtern wird dabei additiv ein offsetwort überlagert, wobei jedem Symbol des Codewortes ein Symbol des Alphabets zugeordnet ist. Im Empfänger wird von dem Übertragungssignal das offsetwort subtrahiert und aus dem so gewonnenen Codewort mittels Polynomdivision durch das dem Code zugrundeliegende Generatorpolynom ein Fehlermuster erzeugt, das für das Maß der Abweichung der Synchronisation des Empfängers charakteristisch ist. Anhand eines Vergleichs des Fehlermusters mit allen möglichen Fehlermustern ist das genaue Maß der Synchronisationsabweichung feststellbar und damit die Synchronisation des Empfängers wiederherstellbar.

Das Radio-Daten-System (RDS) ist in der DIN EN 50 067 definiert.

Danach werden die für den Empfänger bestimmten Informationen in Gruppen übertragen. Die einzelnen Gruppen werden in verschiedener Weise im Empfänger ausgewertet. Jede Gruppe besteht aus 4 Blöcken. In jedem Block wird ein Code-Wort übertragen. Jedes Code-Wort besteht aus 26 Bits, von denen die ersten 16 Bits dem Informationswort und die folgenden 10 Bits dem Prüfwort zugeordnet sind. Während der Übertragung ist jedem Prüfwort noch ein Offset-Wort überlagert, das innerhalb des Blocks mit übertragen wird und als solches im Empfänger wiedererkannt werden kann.

Je nach Bestimmung der Gruppe ist jedem Block in der Gruppe entweder dasselbe Offset-Wort (E) überlagert oder drei innerhalb einer Gruppe verwendete Offset-Worte (A, B, D) bilden mit einem weiteren variablen Offset-Wort (C, C') einen Zyklus von vier Offset-Worten. Durch die zyklische Verwendung von Offset-Worten läßt sich der Beginn einer Gruppe im Sender kennzeichnen und im Empfänger wiedererkennen, denn wenn eines der zyklisch verwendeten Offset-Worte im Empfänger erkannt ist, dann ist damit auch dessen Lage in der Gruppe erkannt. Stimmt zu diesem Zeitpunkt die Zählstellung des Blockzählers im Empfänger mit dieser Lage überein, dann wird der am Ausgang des Blockzählers abnehmbare Gruppentakt im Empfänger synchron zum Sender erzeugt. Damit können die übertragenen Informationsworte der Auswertung zugeführt werden.

Beim Einschalten eines Empfängers sowie bei Umschaltung auf einen anderen Sender oder bei längerem Ausfall des Senders muß diese Übereinstimmung jedoch erst oder wieder hergestellt werden, d. h. der Empfänger muß mit dem jeweiligen Sender synchronisiert werden. Im Anhang C zur erwähnten Norm DIN EN 50 067 ist informativ ein Ausführungsbeispiel für die Block- und Gruppensynchronisation erläutert. Bei dem bekannten Ausführungsbeispiel für die Synchronisation werden die am Ausgang des RDS-Empfängers abnehmbaren Bits nacheinander im Bit-Takt in ein 26-Bit-Schieberegister eingelesen. Während jeder Bit-Periode werden die gespeicherten Bits einmal zum Umlauf in dem Schieberegister veranlaßt und bei dem Umlauf zur Erkennung des überlagerten Offset-Wortes in eine Syndrom-Erkennungsschaltung übernommen, der ein Register zur polynomen Division vorgeschaltet ist. Gehören die zu einem bestimmten Zeitpunkt im Schieberegister gespeicherten 26 Bits zu demselben Block, dann läßt sich in der genannten Schaltung ein dem Offset-Wort zugeordnetes Syndrom erkennen und an dem dem erkannten Syndrom zugeordneten Ausgang der Syndromerkennungsschaltung ein Synchronisierungsimpuls abnehmen. Dieser Synchronisierungsimpuls wird danach in einer Steuerschaltung ausgewertet, die u. a. auch eine Schwungradschaltung umfaßt.

Die Erfindung unterscheidet sich von diesem Verfahren durch die Merkmale im kennzeichnenden Teil des Anspruchs 1.

Sie geht somit einen neuen Weg zur Synchronisierung des Empfängers mit dem Sender und macht dabei mit Vorteil von der Tatsache Gebrauch, daß ein Datenprozessor eine wesentlich höhere Geschwindigkeit bei der Datenverarbeitung zuläßt als diejenige, welche bei dem bekannten Verfahren benutzt wird.

Anders als bei dem Stand der Technik werden nach der Erfindung in einer Bit-Periode die gespeicherten 26 Bits nacheinander einmal mit den Bits jedes der definierten Offset-Worte X-OR-verknüpft, die ein Offset-Wort-Generator im Datenprozessor erzeugt. Dieser Offset-Wort-Generator wird von einem Zähler gesteuert, dessen Zählerstand bei den einzelnen Offset-Worten der normgerechten Zuordnung entspricht. Zur Verknüpfung sind nach der derzeitigen Definitionslage mindestens 6 Umläufe der gespeicherten Bits in jeder Bit-Periode erforderlich. Nach jeder Verknüpfung wird das zugehörige Syndrom berechnet, das in dem Augenblick zu Null wird, wenn die umlaufenden 26 Bits zu ein und demselben Block gehören und wenn das diesem Block zugeordnete Offset-Wort bei der X-OR-Verknüpfung benutzt ist. Wenn des Syndrom zu Null wird, dann befindet sich der Datenprozessor im Radio-Daten-Empfänger in einem synchronen Zustand mit dem senderseitigen Datenprozessor. Zur Synchronisierung der übrigen Abläufe in dem Datenprozessor wird der Blockzähler bei zyklisch verwendeten Offset-Worten auf die dem benutzten Offset-Wort in dem Zähler im Offset-Wort-Generator zugeordneten Zählerstand gesetzt und der Bit-Zähler auf Null zurückgestellt.

Die Schaltungsanordnung zur Durchführung des erfindungsgemäßen Verfahrens unterscheidet sich von der im Oberbegriffs des Anspruchs 5 erfaßten bekannten Schaltung nach Anhang C der DIN EN 50 067 durch die Merkmale aus dem Kennzeichen des Anspruchs 5.

Die Weiterbildung des erfindungsgemäßen Verfahrens nach Anspruch 2 zeigt einen einfachen Weg, den Zählerstand für die Synchronisation des Blockzählers zu finden.

In Anspruch 3 ist eine die Schwungradschaltung erfassende Weiterbildung des erfindungsgemäßen Verfahrens definiert und die Ausgestaltung gemäß Anspruch 4 zeigt eine vorteilhafte Ausbildung dieser Schwungradschaltung für die Synchronisierungsimpulse.

Mit der Schaltungsanordnung nach Anspruch 6 läßt sich ein besonders einfacher Aufbau der Schaltungsanordnung zur Syndromerkennung realisieren.

Mit dem Anspruch 7 ist ein einfacher Aufbau der im Anspruch 5 genannten Steuereinheit entsprechend dem Ausführungsbeispiel erfaßt, während im Anspruch 8 ein Aufbau der Schwungradschaltung zur Durchführung des Verfahrens nach Anspruch 3 gekennzeichnet ist.

Die nähere Erläuterung des in dem Anspruch 1 und seinen Unteransprüchen gekennzeichneten Verfahrens stützt sich auf die in der Zeichnung dargestellte Schaltungsanordnung zu seiner Durchführung.

Darin zeigen:

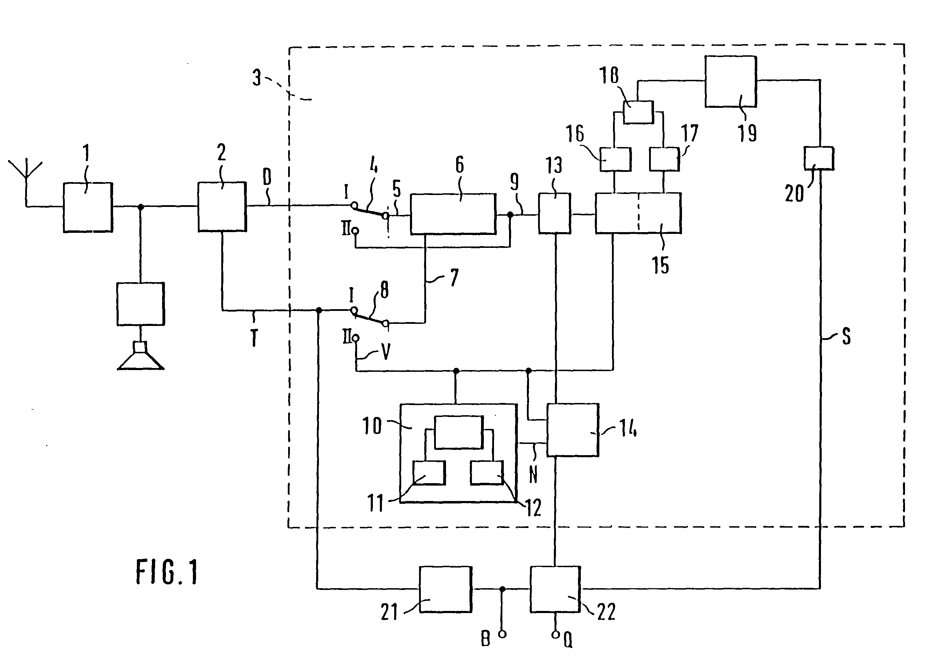

- Fig. 1: ein Blockschaltbild des neuen Datenprozessors,
- Fig. 2: Einzelheiten des Schaltblocks zur Synchronisation des Blockzählers,
- Fig. 3: ein Blockschaltbild der Steuereinheit für den neuen Datenprozessor,
- Fig. 4: ein Blockschaltbild einer neuen Schwungradschaltung.

Die von dem fernen RDS-Sender ausgestrahlte, modulierte Trägerfrequenz wird mit einem Rundfunkempfänger 1 in bekannter Weise empfangen und in ihm demoduliert. An dem Ausgang des Demodulators im Rundfunkempfänger 1 steht das MPX-Signal zur Verfügung. Der hier nicht näher interessierende niederfrequente Anteil des MPX-Signals wird über den Lautsprecher des Rundfunkempfängers zu Gehör gebracht.

Zur Auswertung der auf dem 57 kHz Hilfsträger übertragenen Daten ist an den MPX-Ausgang im Rundfunkempfänger ein Radiodatenempfänger 2 angeschlossen. Sein Aufbau ist beispielsweise der DIN EN 50 067, Bild 2 auf Seite 5, zu entnehmen. Dieser Radiodatenempfänger 2 ist durch einen Datenprozessor 3 abgeschlossen, der vom Radiodatenempfänger den kontinuierlichen Bit-Strom und den regenerierten 1,1875 kHz Bit-Takt übernimmt.

In dem übernommenen Bit-Strom sind die den Gerätebenutzer interessierenden Informationsworte eingebettet, die zusammen mit dem zugeordneten Prüfwort und dem überlagerten Offset-Wort in Blöcken gleicher Länge übertragen werden, welche 26 Bits umfassen. Der Datenprozessor 3 muß zur Rückgewinnung des Informationswortes den Beginn eines Blockes beim Einschalten des Empfängers bzw. bei Umschalten auf einen anderen Sender oder auch nach länger andauernden fehlerhaften Übertragungen in dem Bit-Strom erkennen können. Dazu muß der Stand des Blockzählers 22 im Empfänger mit dem Zählerstand des Blockzählers im RDS-Sender in Übereinstimmung gebracht werden und ein Bit-Zähler 21 zu Beginn eines Blocks auf Null zurückgesetzt werden. Diesem Zweck dienen die im folgenden beschriebenen Bausteine des Datenprozessors.

Im Eingang des Datenprozessor 3 liegt ein Datenumschalter 4, der den Eingang 5 eines 26-Bit-Schieberegisters 6 in seiner Stellung I mit der Datenleitung D verbindet, die an den Ausgang des in der DIN EN 50 067 dargestellten Differenzdecoders des Radio-Daten-Empfängers 2 angeschlossen ist. Zu Beginn eines jeden Bit-Taktes, der über die Bit-Taktleitung T vom Radio-Daten-Empfänger abnehmbar ist, wird das am Ausgang des Differenzdecoders anstehende Bit in das Schieberegister 6 eingelesen. Zugleich werden die bereits im Schieberegister 6 gespeicherten 26 Bits um eine Stelle verschoben, wobei das älteste Bit im Schieberegister entfällt.

Die Verschiebung des Inhalts im Schieberegister 6 wird über dessen Takteingang 7 gesteuert. In der Zuleitung zum Takteingang 7 liegt ein Taktumschalter 8, der in seiner Stellung I den Takteingang 7 mit der Bit-Taktleitung T verbindet.

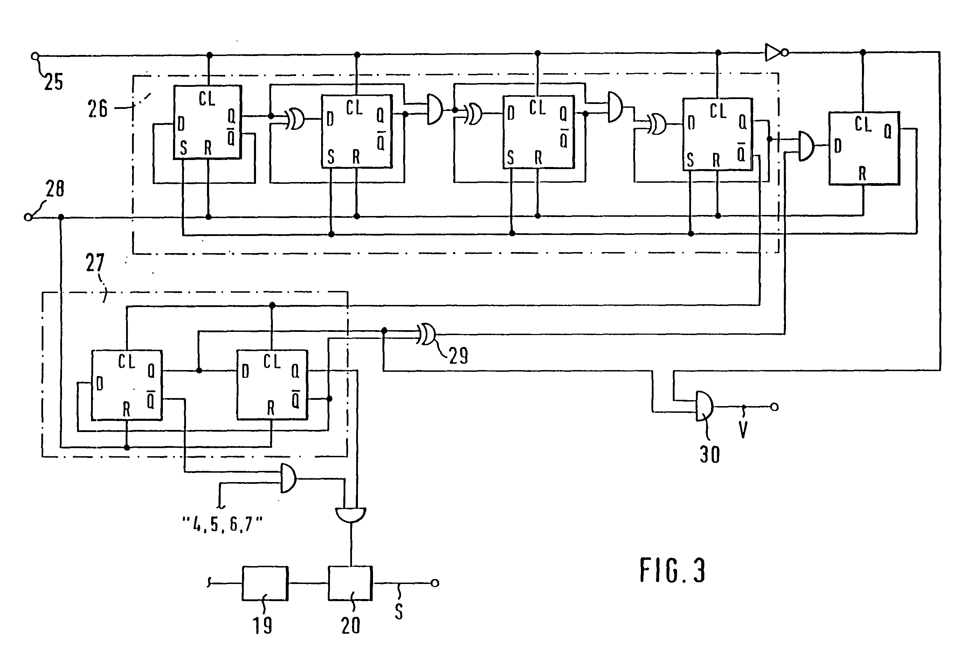

Der Datenumschalter 4 ist in seiner Stellung II mit dem Ausgang 9 des Schieberegisters 6 verbunden. Dadurch kann der Inhalt des Schieberegisters 6 in diesem rotieren. Die Rotation des Inhalts wird über den Taktumschalter 8 in dessen Stellung II von einer Steuereinrichtung 10 gesteuert, die ihre Taktimpulse von einem 456-kHz-Generator 11 und einem 9,5-kHz-Generator 12 erhält. Die Frequenz dieser Generatoren kann auch wesentlich höher gewählt werden. Weitere Einzelheiten der Steuereinheit 10 werden später anhand der Figur 3 näher erläutert. Die Steuereinheit 10 steuert u. a. auch die gleichzeitige Umschaltung des Datenumschalters 4 und des Taktumschalters 8.

Der Datenausgang 9 des Schieberegisters 6 ist ständig mit dem ersten Eingang einer ersten X-OR-Stufe 13 verbunden. Deren zweiter Eingang ist an den Ausgang eines Offset-Wort-Generators 14 angeschlossen, der ebenfalls von der Steuereinheit 10 getaktet wird. Der Ausgang der X-OR-Stufe 13 ist auf den Dateneingang eines 10-Bit-Syndromregisters 15 geführt.

Die zehn Zellen des Syndromregisters 15 sind untereinander zur Syndromberechnung verbunden, z. B. in der aus der DIN EN 50 067, Seite 34, Figur B4, bekannten Weise, so daß auf deren Darstellung hier verzichtet wird. Darüber hinaus sind die Ausgänge der fünf ersten Zellen des Syndromregisters 15 sowie der letzten fünf Zellen jeweils in einer ersten NOR-Stufe 16 bzw. zweiten NOR-Stufe 17 zusammengeführt. Die Ausgänge dieser beiden NOR-Stufen 16, 17 sind ihrerseits in einer Undstufe 18 zusammengefaßt. An dieser Undstufe 18 entsteht jeweils ein Synchronisierungsimpuls, wenn das berechnet Syndrom zu Null wird, d. h. wenn in allen Zellen des Syndromregisters 15 eine Null steht. Somit bilden die drei Torschal- tungen 16, 17 und 18 eine 10-Bit-NOR-Schaltung und zusammen mit dem Syndromregister 15 eine Erkennungsschaltung für das Syndrom Null.

Das Syndrom, das in dem Syndremregister 15 berechnet wird, wird bei fehlerfreiem Empfang immer dann zu Null, wenn einerseits im Schieberegister 6 ein vollständiger Block gespeichert ist und andererseits der gespeicherte Block mit dem ihm senderseitig zugeordneten Offset-Wort in der X-OR-Stufe 13 verknüpft wurde. In diesem Augenblick läßt sich der Blockzähler 22 synchronisieren. Der Synchronisierungsimpuls auf der an den Ausgang der Undstufe 18 angeschlossenen Leitung S zeigt bei fehlerfreiem Empfang des Blocks diesen Zustand an. Die Synchronisierungsimpulse werden in einer Schwungradschaltung 19 gezählt, in deren Ausgang eine Torschaltung 20 liegt. Auf beide wird später noch eingegangen.

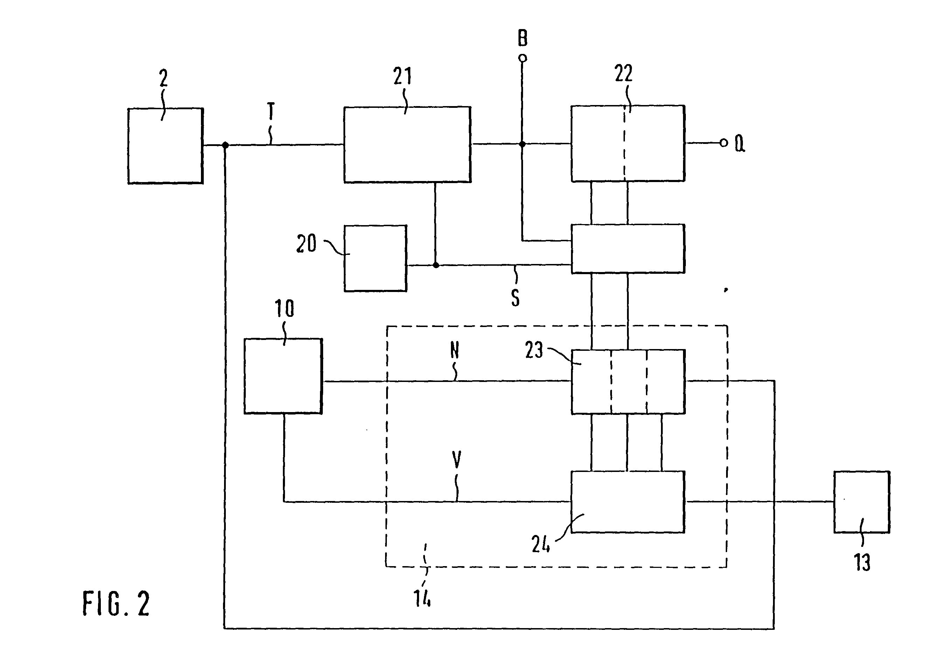

Der Synchronisierungsimpuls wird in dem Datenprozessor 3 u. a. dazu genutzt, um den Blockzähler 22 nach einem Ausfall der Synchronisierung mit Hilfe des Offset-Wort-Generators 14 neu zu setzen. Dies wird im folgenden anhand der Figur 2 näher erläutert.

Wie bereits erwähnt, wird der Bit-Takt in dem Radio-Daten-Empfänger 3 regeneriert und über die Bit-Taktleitung T in den Datenprozessor 3 übernommen. Außerdem werden 26 Bit-Takte in dem Bit-Zähler 21 gezählt. Der Überlauf des Bit-Zählers 21 liefert den Block-Takt B. Die Anzahl der Blocktakte werden im Blockzähler 22 gezählt. Der Blockzähler 22 ist aufgrund der eingangs genannten Normung, wonach 4 Blöcke eine Gruppe bilden, als 2-Bit-Zähler ausgebildet. Seinen Überlauf liefert den Gruppentakt. Innerhalb jeder Gruppe ist jedem Block eines der Offset-Wort fest zugeordnet, das sich innerhalb jeder Gruppe in derselben Reihenfolge - A, B, C, D - wiederholt.

Gelegentlich kann an die Stelle des offset-Wortes C das Offset-Wort C' treten. Dieses unterscheidet sich zwar von dem Offset-Wort C, doch hat der Blockzähler bei der Verwendung des Offset-Wortes C' dieselbe Stellung wie bei dem Offset-Wort C. Daneben ist ein weiteres Offset-Wort E definiert, das bei bestimmten Radio-Daten-Diensten, d. h. in bestimmten Gruppen in jedem Block verwendet wird und daher für die der Erfindung zugrundeliegende Aufgabe der Synchronisierung des Blockzählers unbeachtlich ist. Es wird jedoch im Datenprozessor 3 ebenfalls erkannt.

Der Offset-Wort-Generator 14, der alle Offset-Worte - also auch das Offset-Wort E - erzeugt, umfaßt u. a. einen Adreßzähler 23, der von der Steuereinheit 10 über die Adreßzähler-Taktleituns N getaktet wird. Bei jedem neuen Zählerstand des Adreßzählers 23 wird aus einem ROM 24 das diesem Zählerstand zugeordnete Offset-Wort ausgelesen und in das X-OR-Glied 13 eingespeist. Zeigt sich nun bei einem bestimmten Zählerstand ein Steuersignal auf der Leitung S, dann ist das bei diesem Zählerstand ausgegebene Offset-Wort richtig und der Stand der beiden niedrigsten Zählstellen des Adreßzählers 23 wird zur Synchronisation in den Blockzähler 22 übertragen.

Zunächst wird aber zu Beginn jedes Bit-Taktes der Adreßzähler 23 neu gesetzt, zum Beispiel auf sieben, und zählt danach die Taktimpulse aus der Steuereinheit 10, die mit einer Taktfrequenz von 9,5 kHz auf der Adreßzählerleitung N aufeinanderfolgen. Die Zählweise des Adreßzählers 23 ist derart ausgelegt, daß bei den zyklisch verwendeten Offset-Worten der Stand der beiden letzten Zählstellenjeweils dem Block entsprechen, dem das verwendete Offset-Wort zugeordnet ist. Beispielsweise wird das Offset-Wort D in der Nullstellung des Adreßzählers und die Offset-Worte A und B bei den ersten zwei Zählerstellungen des Adreßzählers 23 in dieser Reihenfolge erzeugt, während die variablen Offset-Worte C und C' in der dritten bzw. siebten Zählstellung erzeugt werden.

Um die mehrfache Verknüpfung des Inhalts des Schieberegisters 6 in einer Bit-Periode mit den verschiedenen Offset-Worten herbeizuführen, wird der Schieberegisterinhalt entsprechend häufig, d. h. in jeder Bit-Periode mindestens n-Mal, nämlich entsprechend der Anzahl der zulässigen Offset-Worte durch die Steuereinheit 10 in dem Schieberegister 6 zum Umlauf gebracht. Dazu muß die Steuereinheit 10 für jeden Umlauf ein Paket von 26 Verschiebeimpulse liefern und zwischen zwei Umläufen ein Zeitfenster zur Auswertung des dabei erhaltenen Syndroms öffnen.

Anhand der Figur 3 wird ein Aufbau der Steuereinheit 10 näher erläutert. Am Eingang 25 eines 4-Bit-Zählers 26 ist der 456-kHz-Generator 11 angeschlossen. Seine Impulse takten den 4-Bit-Zähler 26, dessen Überlauf wiederum einen 2-Bit-Zähler 27 taktet. Beide Zähler werden durch den am Reset-Eingang 28 angelegten Reset-Impuls gelöscht. Die Steuereinheit 10 ist derart aufgebaut, daß der 4-Bit-Zähler 26 abwechselnd bis zehn oder bis sechzehn zählt. Die Steuerung der Zählweise erfolgt durch den Ausgang einer zweiten X-OR-Stufe 29 im Ausgang des 2-Bit-Zählers 27.

Wenn der 4-Bit-Zähler 26 im ersten Zustand (0.0) des 2-Bit-Zählers 27 bis vier gezählt hat, werden die Umschalter 4 und 8 in ihre Stellung II gebracht. Zugleich wird das Syndromregister 15 gelöscht. In dem ersten Zustand (0.0) des 2-Bit-Zählers 27 zählt der 4-Bit-Zähler 26 weiter bis zehn. Sein Überlauf schaltet den 2-Bit-Zähler 27 in dessen zweiten Zustand (1.0). In diesem Zustand des 2-Bit-Zählers 27 zählt der 4-Bit-Zähler 26 bis sechzehn. Während dieser Stellung (1.0) und der folgenden Stellung (1.1) des 2-Bit-Zählers 27 - in welcher der 4-Bit-Zähler 26 wieder bis zehn zählt - ist eine Torschaltung 30 geöffnet, so daß insgesamt sechsundzwanzig Taktimpulse mit einer Frequenz von 456 kHz auf der Verschiebetaktleitung V erscheinen. Über diese Verschiebetaktleitung V werden sowohl das 26-Bit-Schieberegister als auch der Offset-Wort-Generator 14 und das Syndromregister 15 gesteuert. Sie bewirken einerseits einen vollen Umlauf des Inhalts in dem Schieberegister 6, zum anderen die gleichzeitige Ausgabe eines Offset-Wortes aus dem Offset-Wort-Generator 14 und schließlich die gleichzeitige Syndromberechnung in dem Syndromregister 15.

Wenn in dem folgenden vierten Zustand (0.1) des 2-Bit-Zählers 27 der 4-Bit-Zähler 26 von vier bis sieben zählt, ist mit der Torschaltung 20 ein Zeitfenster geöffnet, in dem die Syndromauswertung erfolgen kann.

Bei dem zwölften Zählimpuls des 4-Bit-Zählers 26 im vierten Zustand (0.1) des 2-Bit-Zählers 27 ist eine 9,5-kHz-Periode abgelaufen. Dann erscheint ein Reset-Impuls aus dem 9,5-kHz-Generator 12 am Reset-Eingang 28 und beide Zähler 26 und 27 werden gelöscht, während der Adreßzähler 23 um eine Einheit fortgeschaltet wird. Dadurch steht bei dem nächsten Zyklus der Steuereinheit 10 das nächstfolgende Offset-Wort für die X-OR-Verknüpfung mit dem Inhalt des Schieberegisters 6 zur Verfügung.

Ein Zyklus der Steuereinheit 10 umfaßt nach dem Vorstehenden insgesamt 48 Impulse des 456-kHz-Generators. Die Reset-Impulse auf der Impulsleitung N folgen mit einer Frequenz von 9,5 kHz aufeinander. Innerhalb einer Bit-Periode ergeben sich damit acht Pakete von 26 Verschiebeimpulsen auf der Verschiebeleitung V, die jeweils durch 22 Leertakte getrennt sind. Von den acht Paketen werden im Ausführungsbeispiel sechs für die Synchronisation des Blockzählers verwendet.

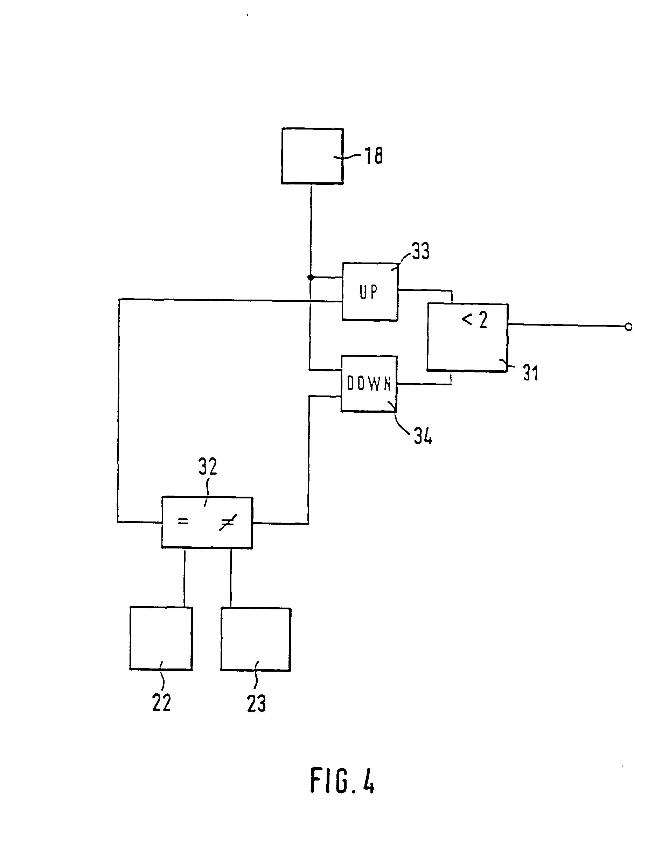

Bisher wurde bei der Erläuterung der Arbeitsweise des Datenprozessors 3 von einem fehlerfreien Empfang der Bits ausgegangen. Diese Annahme ist aber nicht praxisgerecht. Beim Empfang von verfälschten Bits kann der Fall eintreten, daß im Syndromregister 15 das Syndrom auch zu Null wird, wenn die in dem Schieberegister gespeicherten, verfälschten Bits zusammen mit einem Offset-Wort, das diesem Block vom Zyklus her nicht zugeordnet ist, aber - wie dargelegt - vom Offset-Wort-Generator 14 während einer Bit-Periode am zweiten Eingang der ersten X-OR-Stufe 13 ebenfalls zeitweise erzeugt wird, das Syndrom Null ergeben. Ebenso ergibt sich das Syndrom Null, wenn senderseitig das Offset-Wort E verwendet wurde. Um in diesen Fällen eine falsche Synchronisierung des Blockzählers auf den falschen Stand des Adreßzählers 23 zu vermeiden, weist die Schwungradschaltung 19 den in der Figur 4 näher dargestellten Aufbau auf.

Die Schwungradschaltung 19 umfaßt einen Up-/Down-Zähler 31. Dieser wird hochgezählt, wenn der Synchronisierungsimpuls auf der Leitung S erscheint und zugleich das richtige Offset-Wort an der ersten X-OR-Stufe 13 anliegt. Er wird herabgezählt, wenn der Synchronisierungsimpuls erscheint, aber ein falsches Offset-Wort anliegt oder der Synchronisierungsimpuls nicht mit einem Blocktakt zusammenfällt. Wenn der Stand des Up-/Down-Zählers 31 Null wird oder eine vorgegebene Zahl, z. B. 2, unterschreitet, wird der nächstfolgende Synchronisierungsimpuls über den zugeordneten Zählerausgang (< 2) zu der erwähnten Korrektur der Stellung des Blockzählers 22 benutzt. Diese Korrektur erfolgt dann bei jedem Synchronisierungsimpuls, bis der Stand des Up-/Down-Zählers 31 zum Beispiel den Stand 2 wieder erreicht hat.

Zur Erkennung, ob das dem Blockzählerstand entsprechende Offset-Wort an der ersten X-OR-Stufe 13 anliegt, dient eine Vergleichsschaltung 32, in der die Stellung der beiden niedrigeren Stufen des 3-Bit-Zählers 23 mit dem Stand des Blockzählers 22 verglichen wird. Ergibt sich beim Blocktakt Übereinstimmung, dann wird über das Up-Und-Tor 33 der Up-Eingang des Up-/Down-Zählers 31 für den Synchronisierungsimpuls freigegeben, wenn zugleich das Syndrom Null ist. Fehlt die Übereinstimmung, dann wird über das Down-Und-Tor 34 sein Down-Eingang für die Zählung des Synchronisierungsimpulses freigegeben.

Das erfindungsgemäße Verfahren ist nicht auf die im Ausführungsbeispiel angegebenen Frequenzen beschränkt. Innerhalb einer Bit-Periode können die Vorgänge zur Synchronisierung des Blockzählers mit noch wesentlich höherer Geschwindigkeit ablaufen.

## Patentansprüche

1. Verfahren zur Synchronisation eines Blockzählers in einem RDS-Empfänger, bei dem die am Ausgang des RDS-Empfängers (2) abnehmbaren Bits nacheinander im Bit-Takt in ein 26-Bit-Schieberegister (6) eingelesen werden und danach während jeder Bit-Periode zur Übernahme in eine Syndrom-Erkennungsschaltung (15 bis 18) in diesem Schieberegister umlaufen und bei dem die Syndrom-Erkennungsschaltung (15 bis 18) bei bestimmten, zyklisch verwendeten Offset-Wörtern einen Synchronisierungsimpuls auslöst,
**dadurch gekennzeichnet,**
**daß** die Bits in jeder Bit-Periode n-Mal in dem Schieberegister (6) umlaufen, wobei n mindestens gleich der Anzahl der insgesamt zulässigen Offset-Worte ist, daß bei jedem Umlauf die Bits mit den Bits eines anderen der von einem Offset-Wort-Generator (14) in einer durch einen Adreßzähler (23) in normgerechter Reihenfolge erzeugten Offset-Worte X-OR-verknüpft werden, bevor sie in die Syndromerkennungsschaltung (15 bis 18) übernommen werden, daß ein Synchronisierungsimpuls erzeugt wird, wenn das Syndrom Null erkannt ist, und daß der Synchronisierungsimpuls den Blockzähler (22) auf den Stand des Adreßzählers (23) setzt und den Bit-Zähler (21) auf Null zurückstellt, wenn das zur Verknüpfung verwendete Offset-Wort zu den bestimmten Offset-Wörtern gehört.

2. Verfahren nach Anspruch 1,
**dadurch gekennzeichnet,**
**daß** der Blockzähler (22) auf den Stand der beiden letzten Stufen eines Adreß-Zählers (23) gesetzt wird, der im Offset-Wort-Generator (14) die Reihenfolge der Erzeugung der Offset-Worte steuert.

3. Verfahren nach Anspruch 1 oder 2,
**dadurch gekennzeichnet,**
**daß** die Anzahl der Erkennungen des Syndroms Null in einer Schwungradschaltung (19) gezählt werden und der Synchronisierungsimpuls nur dann verwendet wird, wenn bei einer Erkennung des Syndroms Null die Anzahl der vorhergehenden Erkennungen kleiner als eine vorgegebene Zahl ist.

4. Verfahren nach Anspruch 3,
**dadurch gekennzeichnet,**
**daß** die Anzahl der Erkennungen in der Schwungradschaltung (19) um eine Einheit erhöht wird, wenn beim Auftreten des Synchronisierungsimpulses zugleich richtige oder korrigierbare Daten im Schieberegister (6) gespeichert sind, und daß die Anzahl um eine Einheit gemindert wird, wenn der Synchronisierungsimpuls außerhalb eines Blocktaktes oder bei einem falschen Offset-Wort auftritt.

5. Schaltungsanordnung zur Durchführung des Verfahrens nach Anspruch 1, mit einem Datenprozessor (3), der ein 26-Bit-Schieberegister (6) und eine Syndrom-Erkennungsschaltung (15 bis 18) umfaßt, deren Eingang mit dem Ausgang des Schieberegisters (6) verbunden ist, wobei die Syndrom-Erkennungsschaltung (15 bis 18) das aus den empfangenen Radio-Daten ermittelte Syndrom mit einem vorgegebenen Syndrom vergleicht und bei Übereinstimmung der Syndrome einen Synchronisierungsimpuls auslöst,
**dadurch gekennzeichnet,**
**daß** der Ausgang des Schieberegisters (6) über eine erste X-OR-Stufe (13) an den Eingang eines Syndrom-Registers (15) angeschlossen ist, daß der zweite Eingang der ersten X-OR-Stufe (13) mit einem Offset-Wort-Generator (14) verbunden ist, daß eine an das Syndromregister (15) angeschlossene Erkennungsschaltung (16, 17, 18) das Syndrom Null erkennt, daß die Takteingänge des Schieberegisters (6), des Offset-Wort-Generators (14) und des Syndrom-Registers (15) mit einer Steuereinheit (10) verbunden sind, die zum einen (n+m)-Mal in jeder Bit-Periode Pakete von 26 Umlaufimpulsen für die Register (6, 15) erzeugt, wobei n gleich der Anzahl der zulässigen Offset-Worte und m beliebig wählbar ist, und die zum anderen an den Zähleingang eines Adreßzählers (23) im Offset-Wort-Generator (14) angeschlossen ist, der n Zählimpulse zur Erzeugung aller zulässigen Offset-Worte in jeder Bit-Periode liefert, und daß der Blockzähler (22) mit dem Adreßzähler (23) im Offset-Wort-Generator (14) zur Übernahme des Adreßzählerstandes verbunden ist.

6. Schaltungsanordnung nach Anspruch 5,
**dadurch gekennzeichnet,**
**daß** die Ausgänge der einzelnen Zellen des Syndromregisters (15) in einer 10-Bit-NOR-Schaltung (16, 17, 18) zusammengefaßt sind, an deren Ausgang der Synchronisierungsimpuls abnehmbar ist.

7. Schaltungsanordnung nach Anspruch 5 oder 6,
**dadurch gekennzeichnet,**
**daß** die Steuereinheit (10) einen 456-kHz-Generator (11) umfaßt, dessen Ausgang mit dem Eingang (25) eines 4-Bit-Zählers (26) verbunden ist, der die Generatorimpulse wahlweise durch zahn oder sechzehn teilt, daß der Überlauf des Zählers 26 mit einem 2-Bit-Zähler (27) verbunden ist, der in seiner ersten und dritten Stellung die Teilung durch zehn, dagegen in seiner zweiten und vierten Stellung die Teilung durch sechzehn wählt, daß der Ausgang des Generators (11) während der zweiten und dritten Stellung des Zählers (26) über eine Torschaltung (30) mit dem Takteingang des Schieberegisters (6), des Offset-Wort-Generators (14) und des Syndromregisters (15) verbunden ist, und daß die Steuereinheit (10) einen 9,5-kHz-Generator (12) umfaßt, dessen Ausgangsimpulse (N) jeweils die Zähler (26, 27) zurückstellen und den Adreßzähler (23) im Offset-Wort-Generator (14) um eine Einheit fortschalten.

8. Schaltungsanordnung nach Anspruch 5, 6 oder 7 zur Durchführung des Verfahrens nach Anspruch 3,
**gekennzeichnet,**
**durch** einen Up-/Down-Zähler (31), in dessen beiden Zähleingängen Und-Tore (33, 34) liegen, deren einen Eingänge mit dem Ausgang (18) der Erkennungsschaltung für das Syndrom Null verbunden sind, während der zweite Eingang des Up-Und-Tores (33) an den Gleichheitsausgang und der zweite Eingang des Down-Und-Tores (34) an den Ungleichheitsausgang einer Vergleichsschaltung (32) angeschlossen ist, die den Zählerstand des Adreßzählers (23) mit dem Stand des Blockzählers (22) vergleicht.

## Claims

1. Method for synchronizing a block counter in an RDS receiver, in which the bits which can be picked off at the output of the RDS receiver (2) are successively read bit by bit into a 26-bit shift register (6) and then circulate in this shift register during each bit period for transfer to a syndrome recognition circuit (15 to 18) and in which the syndrome recognition circuit (15 to 18) triggers a synchronization pulse for particular, cyclically used offset words,
**characterized**
**in that** the bits circulate in the shift register (6) n times in each bit period, where n is at least equal to the number of offset words which are permissible in total, in that each time they circulate the bits are XORed with the bits of another of the offset words, produced in a standard order by an offset word generator (14) which is controlled by an address counter (23), before they are transferred to the syndrome recognition circuit (15 to 18), in that a synchronization pulse is produced when the syndrome zero is recognized, and in that the synchronization pulse sets the block counter (22) to the state of the address counter (23) and resets the bit counter (21) to zero when the offset word used for the logic combination belongs to the particular offset words.

2. Method according to Claim 1,
**characterized**
**in that** the block counter (22) is set to the state of the last two stages of an address counter (23) which controls the order in which the offset words are produced in the offset word generator (14).

3. Method according to Claim 1 or 2,
**characterized**
**in that** the number of times that the syndrome zero is recognized is counted in a flywheel circuit (19), and the synchronization pulse is used only when, upon recognition of the syndrome zero, the number of previous recognition times is less than a prescribed number.

4. Method according to Claim 3,
**characterized**
**in that** the number of recognition times in the flywheel circuit (19) is increased by one unit when, upon the appearance of the synchronization pulse, correct or corrigible data are stored in the shift register (6) at the same time, and in that the number is reduced by one unit when the synchronization pulse appears outside of a block cycle or for an incorrect offset word.

5. Circuit arrangement for carrying out the method according to Claim 1, having a data processor (3) which comprises a 26-bit shift register (6) and a syndrome recognition circuit (15 to 18) whose input is connected to the output of the shift register (6), with the syndrome recognition circuit (15 to 18) comparing the syndrome ascertained from the received radio data with a prescribed syndrome and triggering a synchronization pulse when the syndromes match,
**characterized**
**in that** the output of the shift register (6) is connected to the input of a syndrome register (15) via a first XOR stage (13), in that the second input of the first XOR stage (13) is connected to an offset word generator (14), in that a recognition circuit (16, 17, 18) connected to the syndrome register (15) recognizes the syndrome zero, in that the clock inputs of the shift register (6), of the offset word generator (14) and of the syndrome register (15) are connected to a control unit (10) which firstly produces packets of 26 circulation pulses for the registers (6, 15) (n+m) times in each bit period, where n is equal to the number of permissible offset words and m is freely selectable, and which secondly is connected to the counting input of an address counter (23) in the offset word generator (14), which delivers n counting pulses for producing all of the permissible offset words in each bit period, and in that the block counter (22) is connected to the address counter (23) in the offset word generator (14) in order to transfer the address counter state.

6. Circuit arrangement according to Claim 5,
**characterized**
**in that** the outputs of the individual cells in the syndrome register (15) are combined in a 10-bit NOR circuit (16, 17, 18) at whose output it is possible to pick off the synchronization pulse.

7. Circuit arrangement according to Claim 5 or 6,
**characterized**
**in that** the control unit (10) comprises a 456-kHz generator (11) whose output is connected to the input (25) of a 4-bit counter (26) which divides the generator pulses either by 10 or by 16, in that the overflow of the counter 26 is connected to a 2-bit counter (27) which, in its first and third positions, selects division by 10, and, by contrast in its second and fourth positions, selects division by 16, in that the output of the generator (11) is connected to the clock input of the shift register (6), of the offset word generator (14) and of the syndrome register (15) via a gate circuit (30) while the counter (26) is in its second and third positions, and in that the control unit (10) comprises a 9.5-kHz generator (12) whose output pulses (N) respectively reset the counters (26, 27) and advance the address counter (23) in the offset word generator (14) by one unit.

8. Circuit arrangement according to Claim 5, 6 or 7 for carrying out the method according to Claim 3,
**characterized**
**by** an up/down counter (31) whose two counting inputs contain AND gates (33, 34) whose first inputs are connected to the output (18) of the recognition circuit for the syndrome zero, while the second input of the up AND gate (33) is connected to the equals output and the second input of the down AND gate (34) is connected to the not-equals output of a comparison circuit (32) which compares the counter state of the address counter (23) with the state of the block counter (22).

## Revendications

1. Procédé de synchronisation d'un compteur de blocs dans un récepteur RDS selon lequel les bits reçus à l'entrée du récepteur RDS (2) sont lus l'un après l'autre à la cadence de bits dans un registre à décalage (6) à 26 bits puis, pendant chaque période de bit, circulent dans cet enregistreur pour être pris en compte dans un circuit de reconnaissance de syndrome (15 à 18), et ce circuit déclenche une impulsion de synchronisation quand apparaissent certains mots décalés utilisés cycliquement,
**caractérisé en ce que**
les bits, au cours de chaque période de bit, passent n fois dans le registre à décalage (6), avec n au moins égal au nombre de l'ensemble des mots décalés acceptables,
- à chaque passage les bits sont connectés en OU exclusif avec les bits d'un autre des mots décalés produits par un générateur de mots décalés (14) selon une séquence normale à travers un compteur d'adresses (23), avant que les bits soient accueillis dans le circuit de reconnaissance de syndrome (15 à 18),
- une impulsion de synchronisation est produite si le syndrome est reconnu nul, et
- l'impulsion de synchronisation met le compteur de bloc (22) à l'état du compteur d'adresses (23) et ramène à zéro le compteur de bits (21) si le mot décalé utilisé pour la connexion appartient aux mots décalés définis.

2. Procédé selon la revendication 1,
**caractérisé en ce que**
le compteur de bloc (22) est mis à l'état des deux derniers étages d'un compteur d'adresses (23) qui, dans le générateur de mots décalés (14) commande la séquence d'obtention des mots décalés.

3. Procédé selon la revendication 1 ou 2,
**caractérisé en ce que**
le nombre des reconnaissances du syndrome zéro est compté dans un circuit à inertie (19) et l'impulsion de synchronisation est utilisée seulement si, lors de la reconnaissance du syndrome zéro, le nombre des reconnaissances antérieures est inférieur à un nombre prédéfini.

4. Procédé selon la revendication 3,
**caractérisé en ce que**
le nombre des reconnaissances dans le circuit à inertie (19) est augmenté d'une unité si, en même temps qu'apparaît l'impulsion de synchronisation, des données exactes ou pouvant être corrigées sont enregistrées dans le registre à décalage, et au contraire le nombre est diminué d'une unité si l'impulsion de synchronisation a lieu en dehors d'une cadence de bloc ou à l'occasion d'un mot décalé erroné.

5. Dispositif de circuit pour mettre en oeuvre le procédé selon la revendication 1, avec un processeur de données (3) qui comprend un registre à décalage (6) à 26 bits et un circuit de reconnaissance de syndrome (15 à 18) dont l'entrée est reliée à la sortie du registre à décalage (6), ce circuit de reconnaissance comparant le syndrome établi à partir des données radio reçues à un syndrome prédéfini et déclenchant un signal de synchronisation quand il y a concordance des syndromes,
**caractérisé en ce que**
- la sortie du registre à décalage (6) est raccordée par un premier étage OU exclusif (13) à l'entrée d'un registre de syndrome (15),
- la seconde entrée du premier étage OU exclusif (13) est reliée à un générateur de mots décalés (14),
- un circuit de reconnaissance (16, 17, 18) raccordé au registre de syndrome (15) reconnaît le syndrome zéro,
- l'entrée cadencée du registre à décalage (6) du générateur de mots décalés (14) et du registre de syndrome (15) est reliée à une unité de commande (10) qui, d'une part produit (n + m) fois, à chaque période de bit, des paquets de 26 impulsions de circulation pour les registres (6, 15), n étant le nombre des mots décalés admissibles, tandis que m peut être choisi à volonté, d'autre part est raccordée à l'entrée d'un compteur d'adresses (23) montée dans un générateur de mots décalés (14) et qui délivre n impulsions de comptage pour produire tous les mots décalés admissibles à chaque période de bit,
- le compteur de bloc (12) est relié au compteur d'adresses (23) dans le générateur de mots décalés (14), pour prendre en charge l'état du compteur d'adresses.

6. Agencement de circuit selon la revendication 5,
**caractérisé en ce que**
les sorties des cellules individuelles du registre de syndrome (15) sont réunies dans un circuit NI à dix bits (16, 17, 18) à la sortie duquel peut être prélevée l'impulsion de synchronisation.

7. Agencement de circuit selon la revendication 5 ou 6,
**caractérisé en ce que**
- l'unité de commande (10) comprend un générateur (11) à 456 kHz dont la sortie est reliée à l'entrée (25) d'un compteur à quatre bits (26) qui divise les impulsions du générateur au choix par dix ou par seize,
- la surcharge du compteur (26) est reliée à un compteur à deux bits (27) qui, dans sa première et dans sa troisième position, sélectionne la division par dix, et la division par seize dans sa deuxième et dans sa quatrième position,
- la sortie du générateur (11), quand le compteur (26) est dans sa deuxième ou dans sa troisième position, est reliée par un circuit combinatoire (30) à l'entrée de synchronisation du registre à décalage (6) du générateur de mots décalés (14) et du registre de syndrome (15),
- l'unité de commande (10) comprend un générateur (12) à 9,5 kHz, dont les impulsions de sortie (N) ramènent chaque fois les compteurs (26, 27) à zéro et font avancer d'une unité le compteur d'adresses (23) situé dans le générateur de mots décalés (14).

8. Agencement du circuit selon la revendication 5, 6 ou 7 pour la mise en oeuvre du procédé selon la revendication 3,
**caractérisé en ce qu'**
il comprend un compteur-décompteur (31) présentant dans ses deux entrées de comptage des portes ET (33, 34), l'une des entrées de ces portes étant reliée à la sortie (18) du circuit de reconnaissance du syndrome zéro, tandis que la seconde entrée de la porte de comptage (33) est raccordée à la sortie d'égalité d'un circuit de comparaison (32), et la seconde entrée de la porte (34) de décomptage (34) est reliée à la sortie d'inégalité de ce circuit de comparaison qui compare l'état du compteur d'adresses (23) à l'état du compteur de blocs (22).
